Europäisches Patentamt

European Patent Office

Office européen des brevets

(11) Numéro de publication: **0 317 375 B1**

(12) **FASCICULE DE BREVET EUROPEEN**

(45) Date de publication de fascicule du brevet: **05.08.92** (51) Int. Cl.⁵: **B60P 3/00**

(21) Numéro de dépôt: **88400500.0**

(22) Date de dépôt: **03.03.88**

(54) **Véhicule de transport de grands carreaux.**

(30) Priorité: **20.11.87 DE 3739353**

(43) Date de publication de la demande:
**24.05.89 Bulletin 89/21**

(45) Mention de la délivrance du brevet:
**05.08.92 Bulletin 92/32**

(84) Etats contractants désignés:
**AT BE CH DE ES FR GB GR IT LI LU NL SE**

(56) Documents cités:
**FR-A- 2 581 603**

**PATENT ABSTRACTS OF JAPAN, vol. 10, no. 222 (M-504)[2278], 2 août 1986; & JP-A-61 60 335 (BRIDGESTONE CORP.)**

(73) Titulaire: **SAINT-GOBAIN VITRAGE INTERNA-TIONAL**
**18, avenue d'Alsace**
**F-92400 Courbevoie(FR)**
(84) Etats contractants désignés:
**BE CH ES FR GB GR IT LI LU NL SE AT**

(73) Titulaire: **VEGLA Vereinigte Glaswerke GmbH**
**Viktoriaallee 3-5**
**W-5100 Aachen(DE)**
(84) Etats contractants désignés:

**DE**

(72) Inventeur: **Hulsmann, Lothar**
**Pfarrer Gau Strasse 15**
**W-5190 Stolberg(DE)**
Inventeur: **Olfers, Reinhard**
**Castroperstrasse 316**
**W-4354 Datteln(DE)**
Inventeur: **Langendorf, Heinrich**
**Bahnhofstrasse 115**
**W-4355 Waltrop(DE)**
Inventeur: **Roeben, Alfred**
**Aachener Strasse 287**
**W-5112 Baesweiler(DE)**
Inventeur: **Wissgens, Hans**
**Stettiner Strasse 49**
**W-5100 Aachen(DE)**

(74) Mandataire: **de Toytot, Robert et al**
**SAINT-GOBAIN RECHERCHE 39 quai Lucien Lefranc**
**F-93300 Aubervilliers(FR)**

## Description

L'invention a pour objet un véhicule de transport de piles ou paquets de carreaux de verre de grandes dimensions, comprenant un châssis à cage surbaissée doté de dispositifs de fixation antagonistes à organes presseurs montés sur des supports solidaires du bâti de la cage et recevant un pupitre où ces grands carreaux sont empilés sur chant, la charge étant ensuite serrée entre lesdits organes presseurs, dont l'un au moins est mobile en direction du paquet de carreaux de verre qui lui fait face, sa surface pouvant se déplacer d'une position de repos éloignée de ce paquet vers une position de travail en contact avec lui et vice-versa, pour exercer sur la charge une pression qui, maintenue pendant le transport, empêche tout glissement mutuel des feuilles sous l'effet des secousses et accélérations.

La publication de brevet FR-A-2 581 603 concerne des véhicules équipés de dispositifs de fixation de ce type. Sur celui décrit en tant qu'exemple d'exécution existent deux organes presseurs symétriques, dont chacun est constitué d'un cadre métallique rigide unique muni de traverses longitudinales et transversales et monté mobile sur un ensemble de montants auxquels il se rattache par des leviers en parallélogramme. Il peut être amené d'une position de repos au voisinage des montants vers une position de travail en contact avec la pile de feuilles de verre par basculement autour du point d'articulation des leviers en parallélogramme; il est alors pressé contre les paquets de carreaux de verre et verrouillé dans cette position de travail. Le basculement s'effectue à l'aide de moyens mécaniques, pneumatiques ou hydrauliques.

Or il est connu, sur des véhicules de transport de lourdes charges homogènes, d'utiliser des organes à coussins d'air comprimé afin d'éviter les chocs violents qui se produiraient si ces charges se lançaient contre les parois sous l'effet des accélérations lors d'un freinage, d'un choc ou simplement en virage. La demande japonaise JP-A-61 60335 montre ainsi l'emploi de plaques montées sur de tels coussins le long des parois d'un camion pour assujettir des conteneurs parallélépipédiques et, par leurs efforts frontaux, les empêcher de glisser en cours de transport.

L'invention, qui se propose de simplifier la construction et l'emploi d'un véhicule de transport de carreaux de verre, y parvient au moyen d'une construction modulaire substituant à chacun des cadres rigides uniques prévus jusqu'ici en tant qu'organes presseurs un ensemble de dispositifs de fixation souples analogues à ceux évoqués ci-dessus, disposés le long du châssis, chacun étant constitué d'au moins un corps creux en matériau flexible qui est fixé sur la face d'appui d'un montant indépendant amovible, et peut être gonflé à l'air comprimé pour imposer aux feuilles de verre des efforts de pression uniformes.

Les éléments presseurs sont ici constitués exclusivement de coussins à soufflets, de grande surface, en caoutchouc ou en matière plastique. Selon l'invention, le dispositif de fixation ne présente donc pas de cadre rigide et verrouillable s'appliquant sur chaque paquet de carreaux de verre, et ne nécessite pas non plus d'éléments constructifs ou de surfaces d'appui mécaniques et, en raison de la souplesse du mode de fixation, se passe de tout entretoisement de ses divers éléments. Il reste cependant capable d'empêcher non seulement des déplacements et basculements de l'ensemble du chargement mais aussi tout mouvement relatif, en particulier tout glissement mutuel des feuilles individuelles.

Au contraire des dispositifs de fixation mécaniques connus, on observe même que les mouvements qui sont provoqués par les torsions de tels châssis lors du transport ne sont pas transmis aux paquets de carreaux de verre mais, au contraire, complètement absorbés par les corps creux très élastiques remplis d'air. Des pressions relativement basses, de l'ordre de 0,1 à 0,2 bar, à l'intérieur des éléments presseurs suffisent pour obtenir une fixation fiable des paquets de feuilles de verre, la pression s'exerçant sur de grandes surfaces et de manière uniforme.

Le retrait des surfaces de contact vers leur position de repos se produit sous l'effet des contraintes internes présentes dans les parois des corps creux par suite de la constitution purement élastique de ces parois. Il est cependant aussi possible, pour aider le retour du corps creux vers sa position initiale, de disposer à l'intérieur ou à l'extérieur des éléments élastiques en caoutchouc ou faisant ressort, lesquels se tendent sous l'effet de la mise sous pression du corps creux et font reculer la surface de contact en se détendant lorsque la pression interne est abaissée.

Des exemples d'exécution de dispositif de fixation selon l'invention et de leur mise en place sur un véhicule de transport de paquets de carreaux de verre sont représentés sur les dessins et seront décrits ci-dessous en référence à ces dessins, qui montrent :

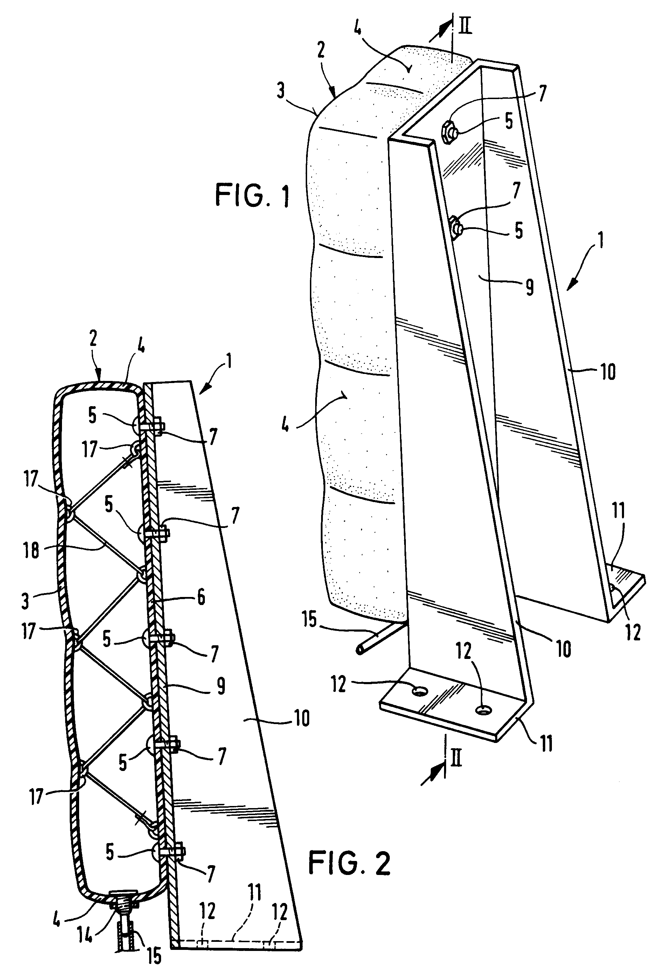

- figure 1, en perpective, un dispositif de fixation isolé,
- figure 2, une coupe verticale selon la ligne II-II de la figure 1 du dispositif de fixation représenté,
- figure 3, une section verticale d'un véhicule équipé des nouveaux dispositifs de fixation,
- figure 4, un mode d'exécution d'une fixation du montant coulissant dans la direction longitudinale du véhicule, et

- figure 5, une coupe longitudinale du véhicule équipé.

Chacun des dispositifs de fixation représentés par les figures est constitué d'un montant métallique rigide 1 et d'un élément presseur formé d'un corps creux 2 dont les parois 3 sont constituées d'un matériau flexible imperméable aux gaz ; se prêtent par exemple à cet usage des caoutchoucs en gomme élastique avec ou sans renfort. Les parois 3 du corps creux 2 peuvent, en tant que telles, être extensibles, mais elles peuvent au lieu de cela être constituées d'un matériau flexible mais non extensible, et dans ce cas les parois latérales 4 seront repliées en accordéon en position de repos.

L'élément presseur peut, comme dans le cas présenté, être constitué d'un unique corps creux 2, en forme de coussin de grandes dimensions ; il peut aussi être formé d'une juxtaposition de plusieurs corps creux en forme de coussins plus petits. La fixation de ces corps creux à chacun des montants 1 s'effectue à volonté, par exemple à l'aide de boulons 5, qui sont avantageusement incorporés dans la paroi arrière 6 du corps creux par vulcanisation. Les boulons 5 sont fixés sur les montants 1 à l'aide d'écrous 7. Au lieu d'employer des boulons, on peut fixer les corps creux en forme de coussin par collage sur la face d'appui 9 du montant 1 ou employer des pinces ou autres dispositifs de fixation liés à la paroi arrière 6 du corps creux 2, et qui sont accrochés sur des éléments de retenue ou des évidements sur la surface d'appui 9.

Le montant 1 présente des ailes en retour à angle droit 10 laissant dégagée sa surface d'appui 9. Ces ailes en retour sont munies de pieds 11 qui sont fixés sur le châssis du véhicule, par exemple à l'aide de boulons passant à travers les orifices 12 percés à cet effet dans leur semelle.

Chaque corps creux fermé en forme de coussin 2 est muni à un endroit approprié d'un raccord 14 fixé dans sa paroi et relié à un tuyau 15. Le tuyau 15 permet d'admettre l'air comprimé à l'intérieur du corps creux 2, et de même de le mettre à l'air libre.

A l'intérieur du corps creux 2 en forme de coussin sont placés des éléments en gomme élastique ou à ressort, qui ont pour rôle de ramener vers l'arrière la paroi antérieure 3 du corps creux 2 servant de surface de contact pour l'appui sur le paquet de feuilles de verre, lorsque le coussin 2 n'est plus sous pression. Dans l'exemple d'exécution représenté, des oreilles 17 sont fixées sur la paroi antérieure 3 et sur la paroi postérieure 6 à l'intérieur du corps creux 2, et un ou plusieurs tendeurs en caoutchouc 18 sont passés alternativement à travers ces oreilles sur les deux parois 3 et 6. Les tendeurs 18 se tendent lors du gonflage du corps creux sous l'effet de l'élévation de la pression interne, et se rétractent quand cette pression diminue.

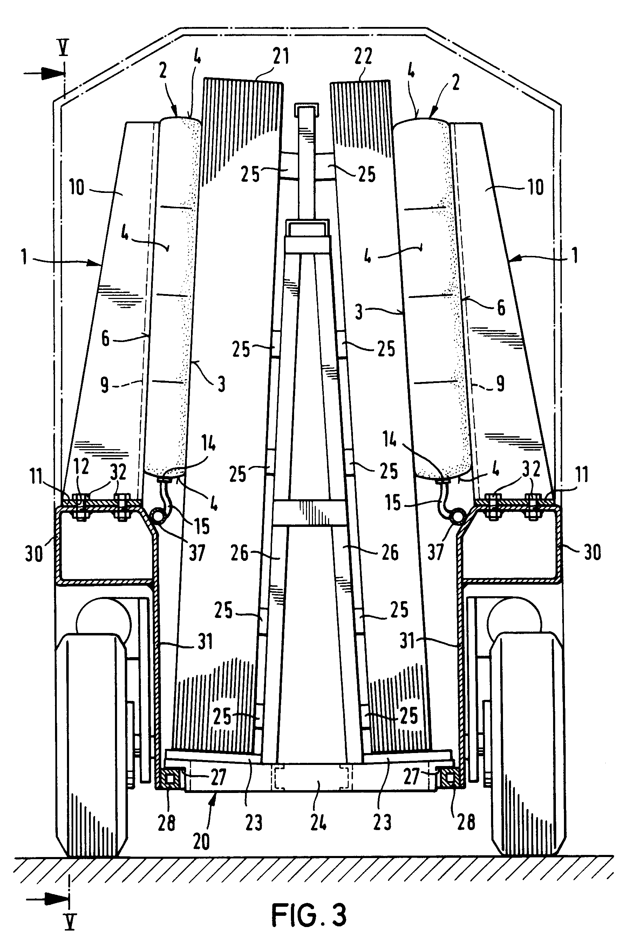

La disposition des dispositifs de fixation sur un véhicule de transport apparaît sur les figures 3 à 5. Les feuilles de verre, qui ont environ 8 m de long et plus de 3 m de large, sont empilées verticalement à l'intérieur de l'usine sur des pupitres 20 en forme de A et constituent ainsi sur ces pupitres 20 deux paquets de carreaux de verre 21 et 22 qui reposent l'un et l'autre sur des sabots de support 23 placés pour leur part sur l'embase 24 des pupitres.

Les faces inclinées qui servent d'appui aux paquets de verre 21 et 22 sont constituées de longerons 25 montés sur des étançons 26 en forme de A. L'embase 24 du pupitre de transport, dans le cas représenté, est munie le long de ses faces latérales de surfaces d'appui 27 qui reposent sur des longrines 28 disposées à l'intérieur du véhicule. Le pupitre de transport peut, le cas échéant, être muni de pieds. De plus, il possède des oreilles de levage, non représentées sur le dessin, à l'aide desquelles une grue peut le transporter pour le chargement et le déchargement du véhicule.

Le véhicule comporte par exemple un semi-remorque à cage surbaissée. La cage surbaissée est constituée d'un bâti porteur 30 et de parois latérales 31, à la partie inférieure desquelles sont fixées les longrines 28.

Les montants 1 des dispositifs de fixation sont fixés sur le bâti 30 de façon appropriée, par exemple en y vissant leurs pieds 11 avec des boulons 32. De cette manière, les dispositifs de fixation peuvent en cas de besoin être mis en place de façon simple sur des véhicules déjà existants ou, si c'est nécessaire, à nouveau démontés.

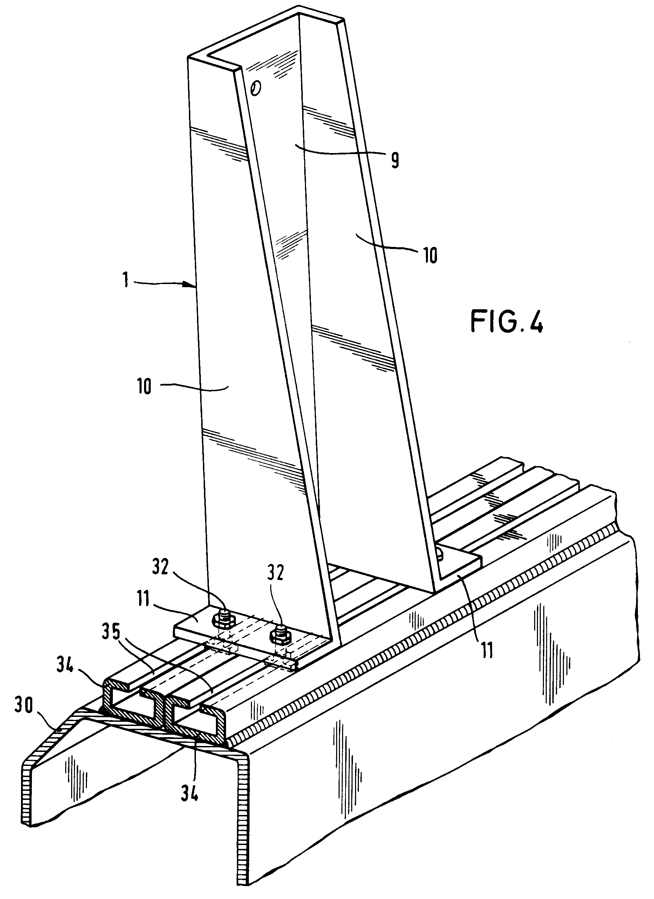

Pour les fixer à l'emplacement désiré, il peut être avantageux de monter les montants 1 sur le bâti 30 de marnère qu'ils puissent coulisser dans le sens longitudinal. Une forme d'exécution possible d'un tel montage est représentée à la figure 4. Dans ce cas, deux profilés 34 à section en C sont soudés sur chaque longeron du bâti 30, côte à côte, tournant vers le haut leurs rainures longitudinales 35 ; celles-ci formeront chacune une fente d'une glissière courant sur toute la longueur de la cage, dans laquelle peuvent être insérées les têtes des boulons à l'aide desquels les pieds 11 sont bloqués sur les glissières 35.

Les montants 1 peuvent ainsi être fixés à l'emplacement choisi le long des glissières du bâti 30 et, en cas de besoin, après desserrage des boulons de fixation, être déplacés jusqu'à un autre emplacement.

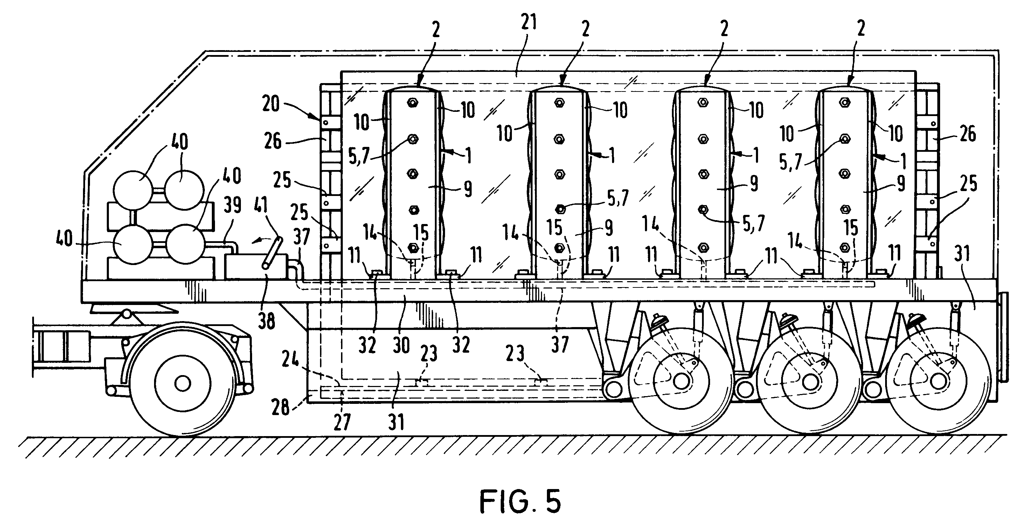

La figure 5 montre en coupe longitudinale la remorque surbaissée représentée en coupe transversale à la figure 3. On observe que sur la longueur du paquet de carreaux de verre 21 sont répartis sur le bâti 30, de chaque côté du véhicule, quatre montants qui portent chacun un corps creux en forme de coussin plat 2, venant s'appuyer sur ce paquet 21 sous l'effet de la pression. Bien entendu, dans des cas particuliers, on peut répartir sur la longueur des paquets de verre plus, ou éventuellement moins de quatre dispositifs de fixation. Chaque corps creux 2 est relié par un tuyau 15 à une conduite 37, qui le raccorde à un régulateur 38, relié lui-même par la conduite 39 à un ou plusieurs réservoirs sous pression 40 ; si on le désire, le régulateur 38 peut aussi se raccorder à une distribution fixe d'air comprimé, disposée par exemple au poste de chargement. Il possède un contacteur ou un levier de commande 41 à l'aide duquel le processus de remplissage et de vidange du corps creux 2 est exécuté.

Le dispositif de régulation 38 renferme un détendeur, grâce auquel la pression dans la canalisation de remplissage 37 et par conséquent dans le corps creux 2 est limitée à une valeur souhaitée, par exemple de 0,1 bar. D'autre part, le régulateur 38 possède un régleur de pression automatique qui fait qu'à partir du réservoir 40, la pression est maintenue constante dans les conduites et par conséquent dans les coussins des corps creux 2, par exemple lorsqu'il se produit des variations de température, de petits défauts d'étanchéité éventuels dans le système ou des variations de pression provoquées pendant le voyage par les forces centrifuges.

Chaque corps creux 2 peut d'autre part être muni d'une vanne de fermeture et ainsi isolé de la canalisation de remplissage si tel ou tel n'est pas nécessaire, ou par exemple présente une fuite.

L'ensemble de ces mesures permet de parer à tout incident.

## Revendications

1. Véhicule de transport de piles ou paquets de carreaux de verre de grandes dimensions, comprenant un châssis à cage surbaissée doté de dispositifs de fixation antagonistes à organes presseurs montés sur des supports solidaires du bâti de la cage, et recevant un pupitre où ces grands carreaux sont empilés sur chant, la charge étant ensuite serrée entre lesdits organes presseurs, dont l'un au moins est mobile en direction du paquet de carreaux de verre qui lui fait face, sa surface pouvant se déplacer d'une position de repos éloignée de ce paquet vers une position de travail en contact avec lui et vice-versa, caractérisé en ce que chaque dispositif de fixation est formé d'un ensemble d'éléments presseurs souples disposés le long du châssis, chacun étant constitué d'au moins un corps creux (2) en matériau flexible qui est fixé sur la face d'appui (9) d'un montant indépendant amovible (1), et peut être gonflé à l'air comprimé.

2. Véhicule selon la revendication 1, caractérisé en ce qu'il comprend un réservoir sous pression (40) auquel chaque corps creux (2) est relié par l'intermédiaire d'un raccord (14) et d'un tuyau (15) branché sur une conduite (37), à travers un régulateur (38) permettant le remplissage sur une station d'air comprimé externe, le maintien en pression, enfin la mise à l'air des corps creux.

3. Véhicule selon la revendication 2, caractérisé en ce que le régulateur (38) comprend un régleur de pression automatique maintenant constante la pression dans la conduite de remplissage (37).

4. Véhicule selon la revendication 1, caractérisé en ce que chaque élément presseur (1,2) peut être déplacé le long du bâti (30).

5. Véhicule selon la revendication 4, caractérisé en ce que le pied (11) du montant (1) et la fixation sur le bâti (30) qui coopère avec lui sont constitués de façon que les montants peuvent coulisser sur une glissière longitudinale (35) du bâti pour y être bloqués dans la position voulue.

6. Véhicule selon la revendication 5, caractérisé en ce que ce sont les boulons de fixation (32) du pied (11) qui coulissent dans les fentes de deux profilés en C (34) fixés eux-mêmes sur le bâti (30).

7. Véhicule selon la revendication 5, caractérisé en ce que le corps creux (2) de chaque élément presseur est muni d'éléments élastiques auxiliaires (18) en caoutchouc ou à ressort qui se tendent lorsque la pression interne s'exerce et se détendent lorsqu'elle se réduit aidant à ramener vers sa position de repos la surface (3) qui vient en contact du paquet (21, 22) de carreaux de verre.

8. Véhicule selon la revendication 7, caractérisé en ce que les éléments élastiques (18) sont disposés à l'intérieur du corps creux.

9. Véhicule selon la revendication 8, caractérisé en ce que les éléments élastiques sont formés d'un tendeur en caoutchouc tendu sur des oreilles (17) entre la paroi antérieure (3) formant surface de contact et la paroi postérieure (6) du corps creux.

## Claims

1. Transport vehicle for stacks or packets of glass panes of large dimensions, comprising a chassis having an underslung cage equipped with fixing devices in opposition to presser elements mounted on supports fixed to the frame of the cage, and receiving a desk, on which these large panes are stacked on edge, the load being subsequently tightened between said presser elements, of which at least one is movable towards the packet of glass panes which is opposite it, it being possible for the surface of this presser element to move from an at-rest position, remote from this packet, towards a working position, in contact with the packet and vice versa, characterized in that each fixing device is formed of an assembly of flexible presser elements disposed along the chassis, each being composed of at least one hollow body (2) of flexible material which is fixed to the bearing face (9) of a movable independent upright (1), and can be inflated with compressed air.

2. Vehicle according to Claim 1, characterized in that it comprises a pressure reservoir (40), to which each hollow body (2) is connected by means of a coupler (14) and a pipe (15) connected to a duct (37), via a regulator (38), making possible filling from an external compressed air station, maintenance at pressure, and finally venting of the hollow bodies.

3. Vehicle according to Claim 2, characterized in that the regulator (38) comprises an automatic pressure controller keeping the pressure in the filling duct (37) constant.

4. Vehicle according to Claim 1, characterized in that each presser element (1, 2) may be displaced along the frame (30).

5. Vehicle according to Claim 4, characterized in that the foot (11) of the upright (1) and the fixing on the frame (30) which cooperates with it are constituted in such a manner that the uprights can slide on a longitudinal slide (35) of the frame to be blocked there in the desired position.

6. Vehicle according to Claim 5, characterized in that it is the fixing bolts (32) of the foot (11) which slide in the slots of two C-section profiles (34), themselves fixed to the frame (30).

7. Vehicle according to Claim 5, characterized in that the hollow body (2) of each presser element is provided with auxiliary elastic elements (18) of rubber or having spring means, which extend when the internal pressure is applied and which contract when this pressure decreases, thus assisting in bringing the surface (3) which comes into contact with the packet (21, 22) of glass panes towards its at-rest position.

8. Vehicle according to Claim 7, characterized in that the elastic elements (18) are disposed inside the hollow body.

9. Vehicle according to Claim 8, characterized in that the elastic elements are formed of a rubber tensioner, tensioned on lugs (17) between the front wall (3) forming the contact surface and the rear wall (6) of the hollow body.

## Patentansprüche

1. Transportfahrzeug für Stapel oder Pakete aus Glasscheiben großer Abmessungen, mit einem Tiefbett-Fahrgestell, das mit gegensinnig wirkenden Befestigungsvorrichtungen mit Druckorganen ausgestattet ist, die an mit dem Tiefbettrahmen verbundenen Stützen montiert sind und das ein Traggestell aufnimmt, auf welchem die großen Glasscheiben auf ihrer Kante stehend gestapelt sind, wobei die Ladung sodann zwischen den Druckorganen geklemmt wird, von denen zumindest eines in Richtung des gegenüberliegenden Glasscheibenpaketes bewegbar ist, wobei seine Oberfläche aus einer vom Glasscheibenpaket entfernten Ruhestellung in eine Arbeitsstellung in Berührung mit dem Glasscheibenpaket und umgekehrt versetzbar ist, dadurch gekennzeichnet, daß jede Befestigungsvorrichtung aus einer Anordnung von nachgiebigen Druckelementen gebildet ist, die entlang des Fahrgestells angeordnet sind und je zumindest einen Hohlkörper (2) aus flexiblem Material aufweisen, der an der Stützwand (9) eines unabhängigen lösbaren Ständers (1) befestigt und durch Druckluft aufblasbar ist.

2. Fahrzeug nach Anspruch 1, dadurch gekennzeichnet, daß es einen Druckluftbehälter (40) aufweist, an den jeder Hohlkörper (2) über einen Anschluß (14) und einen Schlauch (15), der von einer Leitung (37) abgeht, sowie über eine Regeleinrichtung (38) angeschlossen ist, welche das Befüllen an einer externen Druckluftstation, die Aufrechterhaltung des Druckes und die Druckluftbeaufschlagung des Hohlkörpers (2) gestattet.

3. Fahrzeug nach Anspruch 2, dadurch gekennzeichnet, daß die Regeleinrichtung (38) einen automatischen Druckregler umfaßt, der den Druck in der Fülleitung (37) konstant hält.

4. Fahrzeug nach Anspruch 2, dadurch gekennzeichnet, daß jede Regeleinrichtung (38) entlang des Rahmens (30) verschiebbar ist.

5. Fahrzeug nach Anspruch 4, dadurch gekennzeichnet, daß der Fuß (11) der Stütze (1) und die mit diesem zusammenwirkende Halterung auf dem Rahmen (30) so gestaltet sind, daß die Ständer (1) auf einer Längsgleitschiene (35) des Rahmens verschiebbar und an der gewünschten Stelle festlegbar sind.

6. Fahrzeug nach Anspruch 5, dadurch gekennzeichnet, daß die Befestigungsschrauben (32) des Fußes (11) in Längsnuten (35) zweier im Querschnitt C-förmiger Profilschienen (34) verschiebbar sind, die ihrerseits am Rahmen (30) befestigt sind.

7. Fahrzeug nach Anspruch 5, dadurch gekennzeichnet, daß der Hohlkörper (2) jedes Druckelementes mit zusätzlichen gummielastischen oder federnden Elementen versehen ist, die sich bei Druckbeaufschlagung dehnen und sich bei Reduzierung des Innendruckes entspannen und dabei das Zurückziehen der gegen das Glasscheibenpaket (21, 22) zur Anlage kommenden Fläche (3) in ihre Ruhestellung unterstützen.

8. Fahrzeug nach Anspruch 7, dadurch gekennzeichnet, daß die elastischen Elemente (18) innerhalb des Hohlkörpers (2) angeordnet sind.

9. Fahrzeug nach Anspruch 8, dadurch gekennzeichnet, daß die elastischen Elemente durch ein Gummiseil gebildet sind, das in Ösen (17) zwischen der die Kontaktfläche bildenden Vorderwand (3) und der Rückwand (6) des Hohlkörpers (2) gespannt ist.

FIG. 1

FIG. 2

FIG. 3

FIG.4

FIG. 5

EP 0 317 375 B1